Europäisches Patentamt

European Patent Office

Office européen des brevets

(19)

(11) **EP 0 702 050 A1**

(12) **EUROPÄISCHE PATENTANMELDUNG**

(43) Veröffentlichungstag:
20.03.1996 Patentblatt 1996/12

(51) Int. Cl.$^6$: **C08G 85/00**, C08G 64/40,
C08G 63/90

(21) Anmeldenummer: 95112440.3

(22) Anmeldetag: 08.08.1995

(84) Benannte Vertragsstaaten:
**BE DE FR GB IT NL**

(30) Priorität: **19.08.1994 DE 4429463**

(71) Anmelder: **BAYER AG**
**D-51368 Leverkusen (DE)**

(72) Erfinder:
• **Fennhoff, Gerhard, Dr.**
**D-47877 Willich (DE)**
• **Bunzel, Lothar**
**D-47906 Kempen (DE)**
• **Pakull, Ralf, Dr.**
**D-50259 Pulheim (DE)**
• **Haese, Wilfried, Dr.**
**D-51519 Odenthal (DE)**

(54) **Verfahren zur Reduzierung des Oligokondensatanteils von Polykondensaten**

(57)    Die Erfindung betrifft ein Verfahren zur Reduzierung des Anteils an Oligokondensaten von Polykondensaten, insbesondere von Polycarbonaten und Polyestercarbonaten, sowie die aus dem Verfahren erhältlichen Polykondensate verbesserter Einheitlichkeit.

Eine Lösung des Polykondensates wird mit einem Nicht-Lösungsmittel geringer Dichte, dem geringe Mengen Säure beigefügt wurden, extrahiert. Z.B. wird eine Polycarbonatlösung in Dichlormethan mit Phosphorsäure enthaltendem Diethylenglykol behandelt.

EP 0 702 050 A1

## Beschreibung

Polykondensate, insbesondere aromatische Polycarbonate, aromatische Copolycarbonate oder aromatische Polyestercarbonate, sind grundsätzlich bekannt.

Aus den bekannten Herstellungsverfahren werden Polykondensate mit zumeist größerer Uneinheitlichkeit erhalten. Die deutsche Patentschrift DE 41 04 573 C2 beschreibt ein Aufarbeitungsverfahren zur Verminderung der Uneinheitlichkeit von Polymeren oder Polykondensaten. Dabei wird durch Gegenstromextraktion der Polymeren oder Polykondensate bei Fraktionierung der Endprodukte gegebenenfalls durch Mehrfachfraktionierung, die Uneinheitlichkeit der Polykondensate gesenkt. Die Uneinheitlichkeit wird bestimmt durch den Anteil an niedermolekularen Oligokondensaten im Polykondensat.

Zur Durchführung im technischen Maßstab ist das Verfahren gemäß DE 41 04 573 jedoch ungeeignet, da bei der Herstellung großer Produktionsmengen entweder sehr viele Trennsäulen in Betrieb genommen werden müssen, welche alle mit entsprechenden möglichst gleichgeschalteten Pumpen betrieben werden müßten oder die Dimensionierung der Trennapparatur müßte alternativ vergrößert werden, wobei die Trenndauer jedoch unerwünscht lange Zeit in Anspruch nehmen würde.

Die Patentschrift US 3 668 181 beschreibt ein Verfahren zur Reinigung von Polycarbonaten, bei dem hauptsächlich anorganische Restsalze und Bisphenol Reste entfernt werden. Das Verfahren geht aus von einen Polycarbonatreinigungsprozeß unter Verwendung von Nichtlösemitteln für Polycarbonat bei dem das Polycarbonat gefällt und mit Wasser/Methanol- bzw. Wasser/Dimethoxyethan- Gemischen gereinigt wird. Die Verminderung des Oligomerengehaltes spielt dabei eine untergeordnete Rolle.

Aufgabe der vorliegenden Erfindung ist es, ein Verfahren zur Reduzierung des Oligokondensatanteils für Polykondensate, insbesondere aromatische Polycarbonate, Copolycarbonate oder Polyestercarbonate, bereitzustellen, das die genannten Nachteile nicht aufweist und eine Reinigung im technischen Maßstab ermöglicht, ohne eine Verschlechterung der Eigenschaften oder Zusammensetzungen der Polykondensate.

Die Aufgabe wird erfindungsgemäß gelöst durch ein Verfahren zur Reduzierung des Oligokondensatanteils von Polykondensaten, insbesondere von aromatischem Polycarbonat, Copolycarbonat oder Polyestercarbonat, dadurch gekennzeichnet, daß man das Polykondensat in einem Lösungsmittel A) löst, die entstandene Lösung einmal oder mehrmals mit einem anderen Lösungsmittel oder Lösungsmittelgemisch B), das das Polykondensat schlecht oder gar nicht löst und eine geringere Dichte als A) aufweist, sowie mit von 0,001 Gewichtsteilen bis 1 Gew.-Teilen, bevorzugt von 0,005 bis 0,5 Gewichtsteilen, bezogen auf 100 Gew.-Teile Lösungsmittel B) einer konzentrierten Säure C) innig vermischt und anschließend das Gemisch in zwei Phasen separieren läßt, die dichtere Lösungsmittelphase abtrennt und mit Wasser wäscht und das Polykondensat aus der dichteren Phase isoliert. Das Lösungsmittel A) und Lösungsmittel bzw. Lösungsmittelgemisch B) werden in einem Gewichtsverhältnis A) : B) von 2:1 bis 20:1, bevorzugt von 1:1 bis 10:1 eingesetzt.

Geeignete bevorzugte aromatische Polycarbonate oder aromatische Copolycarbonate, die beim erfindungsgemäßen Verfahren zur Anwendung kommen, sind solche auf der Basis von Bisphenolen wie Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren kernalkylierte und kernhalogenierte Verbindungen.

Bevorzugte Bisphenole sind z.B.: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Bisphenole sind z.B.: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Bisphenole sind z.B. in den US-PSen 3 028 365, 2 999 835, 3 148 172, 2 991 273, 3 271 367 und 2 999 846, in den deutschen Offenlegungsschriften 1 570 703, 2 063 050, 2 036 052, 2 211 956, der französischen Patentschrift 1 561 518, in der Monographie "H. Schnell, Chemistry and Physics of Polycarbonates, Interscience Publishers, New York 1964", in der deutschen Patentanmeldung P 38 32 396.6 sowie in den japanischen Offenlegungsschriften 62039/1986, 62040/1986 und 105 550/1986 beschrieben.

Es können auch beliebige Mischungen der vorgenannten Bisphenole für die Herstellung der Polycarbonate oder Copolycarbonate verwendet werden.

Es können auch geringe Mengen, vorzugsweise Mengen zwischen 0,05 und 2,0 Mol-%, bezogen auf die Mole eingesetzter Bisphenole an tri- oder mehr als trifunktionellen Verbindungen, insbesondere solchen mit drei oder mehr als drei phenolischen Hydroxylgruppen für die Herstellung der Polycarbonate und/oder Copolycarbonate mitverwendet sein. Einige der verwendbaren Verbindungen mit drei oder mehr als drei phenolischen Hydroxylgruppen sind beispielsweise

Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl)-propan, 2,4-Bis-(4-hydroxyphenyl-isopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Bisphenole, an Verzweigern können entweder mit den Bisphenolen selbst und den üblichen Molekulargewichtsreglern in der wäßrigen alkalischen Phase vorgelegt werden oder in einem organischen Lösungsmittel, gelöst vor der Phosgenierung, zugegeben werden.

Als Molekulargewichtsregler können die in der deutschen Offenlegungsschrift DE 39 19 553 erwähnten oder andere konventionelle Molekulargewichtsregler eingesetzt worden sein. Es können auch Mischungen von Molekulargewichtsreglern eingesetzt werden.

Bevorzugt finden weiter aromatische Polyestercarbonate Anwendung im erfindungsgemäßen Verfahren, die aus mindestens einem aromatischen Diol, aus mindestens einer aromatischen Dicarbonsäure und gegebenenfalls aus Kohlensäure aufgebaut sind. Geeignete Bisphenole hierzu sind beispielsweise die bereits oben genannten. Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan und Trimethyl-3-phenylindan-4,5'-dicarbonsäure.

Die aromatischen Polycarbonate, aromatischen Copolycarbonate oder aromatischen Polyestercarbonate können nach Verfahren hergestellt worden sein, wie sie für die Polycarbonat-, Copolycarbonat- und Polyestercarbonatherstellung aus der Literatur bekannt sind, so z.B. nach Verfahren in homogener Lösung, nach Schmelzumesterungsverfahren und nach dem Zweiphasengrenzflächenverfahren.

Zur Durchführung des erfindungsgemäßen Verfahrens werden die in den für sie üblichen Lösungsmitteln A) gelösten Polykondensate, die noch die durch die Synthese bedingten Oligokondensate enthalten, in einem Rührkolben bzw. bei technischem Maßstab in einem Rührkessel, zusammen mit dem Lösungsmittel bzw. Lösungsmittelgemisch B), sowie von 0,001 bis 1 Gew.-Teile, bezogen auf 100 Gew.-Teile Lösungsmittel B), einer konzentrierten Säure C) versetzt und kräftig gerührt. Nach dem Rühren werden die sich entmischenden Phasen getrennt und einzeln aufgearbeitet. Anstelle eines Rührkessels oder auch nach dem Rühren im Rührkessel kann auch ein Phasenseparator verwendet werden. Der Phasenseparator dient in beiden Fällen sowohl als zusätzlicher Extraktionsreaktor oder auch zur Phasentrennung. Die Oligokondensate werden hierbei von den Polykondensaten abgetrennt.

Geeignete Lösungsmittel A) im Sinne der Erfindung sind z.B. halogenhaltige Kohlenwasserstoffe wie Dichlormethan, Chloroform, Tetrachlorkohlenstoff, Tetrachlorethan, Chlorbenzol sowie Tetrahydrofuran oder Toluol oder Gemische der vorgenannten Lösungsmittel.

Geeignete Lösungsmittel B) im Sinne der Erfindung sind beispielsweise Ethylenglykol, Diethylenglykol, Diethylenglykolmethylether oder Diethylenglykolethylether sowie Gemische aus diesen.

Bevorzugte Lösunsmittel A) sind Dichlormethan oder Chlorbenzol, besonders bevorzugte Lösungsmittel B) sind Diethylenglykol oder Diethylenglykolethylether.

Geeignete konzentrierte Säuren C) sind Ameisensäure, Essigsäure, Zitronensäure, Salzsäure, Schwefelsäure, schweflige Säure, Phosphorsäure oder phosphorige Säuren. Bevorzugt eingesetzt werden Salzsäure, Phosphorsäure oder Schwefelsäure. Es können auch Gemische der genannten Säuren eingesetzt werden.

Die Aufarbeitung der Lösungsmittelphasen kann auf zweierlei Weise erfolgen:

1. Das Lösungsmittel der dichteren Phase wird abdestilliert und das ausfallende Polykondensat abfiltriert, mit Wasser gewaschen und im Vakuum getrocknet.
2. Im Falle wasserlöslicher Nichtlösemittel werden die Nichtlösemittel mit Wasser extrahiert und die Polykondensate durch Entfernen der verbliebenen Lösungsmittel nach den üblichen, dem Fachmann bekannten Methoden isoliert.

Um die Trennwirkung zu erhöhen, kann das erfindungsgemäße Verfahren auch in mehreren Stufen durchgeführt werden.

Die gereinigten Polykondensate können als Pulver oder aber durch zusätzliches Aufschmelzen z.B. per Extruder und Granulieren in Form von Granulaten erhalten werden. Beide Arten der Aufarbeitung eignen sich auch für die Phase, welche die Oligokondensate enthält, wobei selbstverständlich das Extrudieren und Granulieren entfällt.

Charakteristisch für das erfindungsgemäße Verfahren ist, daß das Molekulargewicht (Gewichtsmittel und Zahlenmitel) bezogen auf das der Ausgangsprodukte steigt und die Uneinheitlichkeit fällt.

Weiterer Gegenstand der Erfindung sind Polykondensate mit einem Molekulargewicht (Gewichtsmittel) Mw von 14 000 bis 30 000, bevorzugt von 15 000 bis 20 000, erhältlich nach dem erfindungsgemäßen Verfahren. Diese zeichnen sich dadurch aus, daß ihr Anteil an Oligokondensat mit einem Molekulargewicht (Gewichtsmittel) Mw kleiner oder gleich 5000, weniger als 5 Gew.-%, bevorzugt weniger als 3 Gew.-%, besonders bevorzugt weniger als 1 Gew.-%, und ihre Uneinheitlichkeit ≤ 0,8 beträgt. Den gereinigten erfindungsgemäßen Polykondensate können die für aromatische Polycarbonate oder Polyestercarbonate bekannten Zusätze wie Stabilisatoren, Entformungsmittel, Antistatika, Flammschutzmittel und/oder Farbkonzentrate in üblichen Mengen zur Weiterverarbeitung zugesetzt werden. Die Polykondensate können gegebenenfalls mit den obengenannten Zusätzen weiterverarbeitet werden, indem man ihre Bestandteile in bekannter Weise vermischt und z.B. bei Temperaturen von 200 bis 360°C in üblichen Mischvorrichtungen wie Innenknetern, Extrudern oder Doppelwellenschnecken schmelzecompoundiert oder schmelzextrudiert.

Die gereinigten Polykondensate gemäß der Erfindung können zur Herstellung von Formkörpern jeder Art verwendet werden. Insbesondere können Formkörper durch Spritzguß hergestellt werden. Beispiele für herstellbare Formkörper sind Gehäuseteile jeder Art, z.B. für Haushaltsgeräte, Platten für den Bau- oder Gartenbausektor, Geräte im medizinischen Bereich wie Spritzen oder Dialysatoren bzw. Linsen für optische Anwendungen oder optische Datenspeicher.

## Beispiele

### Beispiel 1

5 kg Polycarbonat (Molekulargewicht Gewichtsmittel (Mw) 17625, mit einer rel. Lösungsviskosität $\eta_{rel}$ von 1.196 (gemessen in Methylchlorid bei 25°C bei einer Konzentration von 5 g/l) Molekulargewicht Zahlenmittel 9247, Uneinheitlichkeit U = Mw/Mn - 1 = 0,91 ) werden in 73,5 l Dichlormethan bei Raumtemperatur gelöst. Die Lösung wird mit einer Mischung aus 24 kg Diethylenglykol und 6 ml konzentrierter Phosphorsäure (85 %ig) unter stetigem Rühren langsam versetzt. Nach vollständiger Zugabe wird die Mischung noch 10 Minuten weitergerührt. Anschließend läßt man die Phasen separieren.

Die untere Phase wird abgetrennt und mit 63 l Dichlormethan verdünnt und erneut mit 24 kg einer Mischung aus Diethylenglykol und 6 ml konzentrierter Phosphorsäure (85 %ig) 10 Minuten verrührt. Nach erneutem Abtrennen und Verdünnen der unteren Phase mit Dichlormethan wird die resultierende Lösung des gereinigten Polycarbonats 10 mal mit entsalztem Wasser in einem Separator gewaschen und die organische Phase bis zur Trockne eingeengt. Das so gewonnene Polycarbonat weist folgende Molekulargewichtskenngrößen auf (Molekulargewicht Mw Gewichtsmittel 21144, Molekulargewicht Zahlenmittel Mn = 14237, Uneinheitlichkeit = 0,49. Das Polycarbonat besitzt eine relative Lösungsviskosität von 1.205 (gemessen in Methylenchlorid als 5 g/l Lösung bei 25°C).

Der Gehalt an Oligocarbonaten mit einem Molekulargewicht ≤5000 vor der obengenannten Behandlung wurde mittels HPLC zu 8 Gew.-% ermittelt.

Der Gehalt an Oligocarbonaten mit einem Molekulargewicht Mw ≤5000 betrug nach der obengenannten Behandlung weniger als 1 Gew.-%.

Das Gewichtsmittel des Molekulargewichts wurde ermittelt durch Gelpermeationschromatographie mit Polycarbonateichung.

Das Zahlenmittel des Molekulargewichts wurde gleichfalls durch Gelpermationschromatographie mit Polycarbonateichung ermittelt.

### Beispiel 2

81,1 g Polycarbonat mit den unten beschriebenen Eigenschaften werden in 320 ml Dichlormethan gelöst und mit 1 ml konzentrierter Phosphorsäure (85 %ig) in 40 ml Diethylenglykol unter Rühren versetzt. Weiterhin werden 890 ml Dichlormethan mit 310 ml Diethylenglykol unter Rühren vermischt. Zur Extraktion wird das zweite Lösungsmittelgemisch in einem Wellenbrecherkolben der Polycarbonatlösung zugetropft und 10 Minuten gerührt. Nach 30 minütigem Absitzenlassen wird die untere Phase abgetrennt und erneut mit einer Mischung aus 890 ml Dichlormethan und 310 ml Diethylenglykol sowie 1 ml konzentrierter Phosphorsäure unter Rühren vermischt. Die nach der Phasenseparierung sich absetzende untere Phase wird abgetrennt und mit der doppelten Volumenmenge Dichlormethan versetzt und anschließend 6 mal mit vollentsalztem Wasser extrahiert. Die verbleibende Lösung wird zunächst am Rotationsverdampfer und schließlich über Nacht im Vakuumtrockenschrank bei 120°C zur Trockne eingeengt.

Die Analyse des Polycarbonats per Gelpermeationschromatographie ergibt vor der Trennung ein Gewichtsmittel Molekulargewicht von 18106, ein Zahlenmittel Molekulargewicht von 9282 sowie eine Uneinheitlichkeit von 0,95. Die relative Lösungsviskosität $\eta_{rel}$ (gemessen bei als 5 g/l Lösung bei 25°C in Methylenchlorid) betrug 1,201. Nach der Reinigung betrug das per Gelpermeationschromatographie ermittelte Gewichtsmittel des Molekulargewichtes 23382, das Zahlenmittel Molekulargewicht betrug 17160 und die Uneinheitlichkeit 0,36. Die relative Lösungsviskosität stieg auf 1,262.

### Vergleichsbeispiel

Der gleiche Versuch wie in Beispiel 1 beschrieben wurde wiederholt, jedoch jeweils ohne den Zusatz der Phosphorsäure. Das hierbei erhaltene Polycarbonat wies nur noch eine relative Lösungsviskosität $\eta_{rel}$ von 1,175 im Vergleich zur rel. Viskosität des Ausgangsmaterials von 1,196 (beide gemessen als 5 g/l Methylenchloridlösung bei 25°C). Beim Weglassen der Säurekomponente wird also ein deutlicher Abbau des Molekulargewichtes beobachtet.

**Patentansprüche**

1. Verfahren zur Reduzierung des Oligokondensatanteils von Polykondensaten, dadurch gekennzeichnet, daß man das Polykondensat in einem Lösungsmittel A) löst, die entstandene Lösung einmal oder mehrmals mit einem anderen Lösungsmittel oder Lösungsmittelgemisch B), das das Polykondensat schlecht oder gar nicht löst, eine geringere Dichte als A) aufweist und in einem Gewichtsverhältnis von Komponente A) zu Komponente B) von 2.1 bis 20:1 eingesetzt wird, sowie mit von 0,001 bis 1 Gewichtsteilen bezogen auf 100 Gewichtsteile Lösungsmittel B) einer konzentrierten Säure C) innig vermischt und anschließend das Gemisch in zwei Phasen separieren läßt, die dichtere Lösungsmittelphase abtrennt und mit Wasser wäscht und das Polykondensat aus der dichteren Phase isoliert.

2. Verfahren gemäß Anspruch 1 dadurch gekennzeichnet, daß das Polykondensat ein aromatisches Polycarbonat, Copolycarbonat oder ein Polyestercarbonat ist.

3. Verfahren gemäß den Ansprüchen 1 bis 2 dadurch gekennzeichnet, daß als Lösungsmittel A) Dichlormethan, Chloroform, Tetrachlorkohlenstoff, Tetrachlorethan, Chlorbenzol, Tetrahydrofuran oder Toluol oder Gemische der genannten Lösungsmittel eingesetzt werden.

4. Verfahren gemäß den Ansprüchen 1 bis 3 dadurch gekennzeichnet, daß als Lösungsmittel B) Ethylenglykol, Diethylenglykol, Diethylenglykolmethylether oder Diethylenglykolethylether oder Gemische der genannten Lösungsmittel eingesetzt werden.

5. Verfahren gemäß den Ansprüchen 1 bis 4 dadurch gekennzeichnet, daß als konzentrierte Säure C) Ameinsensäure, Essigsäure, Zitronensäure, Salzsäure, Schwefelsäure, Schweflige Säure, Phosphorsäure oder Phosphorige Säure eingesetzt werden.

6. Verfahren gemäß den Ansprüchen 1 bis 5 dadurch gekennzeichnet, daß von 0,005 bis 0,1 Gewichtsteile bezogen auf 100 Gewichtsteile Lösungsmittel B) der konzentrierten Säure C) eingesetzt werden und daß das Gewichtsverhältnis von Komponente A) zu B) von 4:1 bis 10:1 beträgt.

7. Verfahren gemaß den Ansprüchen 1 bis 6 dadurch gekennzeichnet, daß als Lösungsmittel A) Dichlormethan oder Chlorbenzol oder Gemische aus diesen und als Lösungsmittel B) Diethylenglykol oder Diethylenglykolethylether oder Gemische aus diesen eingesetzt werden.

8. Polykondensate einer Uneinheitlichkeit von kleiner oder gleich 0,8 mit einem Molekulargewicht (Gewichtsmittel) $M_W$ von 14000 bis 30000 erhältlich nach dem Verfahren gemäß den Ansprüchen 1 bis 7 dadurch gekennzeichnet, daß ihr Anteil an Oligokondensat mit einem Molekulargewicht (Gewichtsmittel) $M_W \leq 500$ weniger als 5 Gew.-% beträgt.

9. Polykondensate gemäß Anspruch 8 dadurch gekennzeichnet, daß ihr Anteil an Oligokondensat mit einem Molekulargewicht (Gewichtsmittel) $M_W \leq 500$ weniger als 3 Gew.-% beträgt.

| | Europäisches Patentamt | EUROPÄISCHER RECHERCHENBERICHT | | | Nummer der Anmeldung EP 95 11 2440 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y<br>X | EP-A-0 499 267 (PLÜSS-STAUFER AG)<br><br>* Seite 2, Zeile 43 - Seite 3, Zeile 25 *<br>* Seite 3, Zeile 58 - Seite 4, Zeile 17 *<br>* Seite 7, Zeile 38 - Seite 10, Zeile 9 *<br>* Abbildung 4 * | 1-7<br>8,9 | C08G85/00<br>C08G64/40<br>C08G63/90 |
| D | & DE-A-41 04 573 (...)<br>--- | | |
| D,Y | H. SCHNELL 'chemistry and physics of polycarbonates'<br>1964 , INTERSCIENCE PUBLISHERS , NEW YORK<br>* Seite 110 - Seite 114 *<br>--- | 1-7 | |
| X | EP-A-0 293 891 (IDEMITSU PETROCHEMICAL CO.)<br>* Zusammenfassung; Beispiel 2 *<br>--- | 8,9 | |
| X | US-A-4 927 910 (K.R. STEWART)<br>* Zusammenfassung; Beispiele 1,2 *<br>--- | 8,9 | |
| X | EP-A-0 510 602 (KANSAI PAINT CO. LTD.)<br>* Zusammenfassung; Beispiel 10 *<br>--- | 8,9 | **RECHERCHIERTE SACHGEBIETE (Int.Cl.6)**<br><br>C08G |
| D,A | US-A-3 668 181 (B.C. OXENRIDER)<br>* Ansprüche 1,4; Beispiele 2,4 *<br>* Spalte 3, Zeile 3 - Zeile 12 *<br>* Spalte 4, Zeile 58 - Spalte 5, Zeile 38 *<br>--- | 1,2,5,8 | |
| A | US-A-3 629 202 (R. GILKEY ET AL.)<br>* Anspruch 1 *<br>* Spalte 1, Zeile 21 - Spalte 2, Zeile 48 *<br>----- | 1,5 | |

Der vorliegende Recherchenbericht wurde für alle Patentansprüche erstellt

| Recherchenort | Abschlußdatum der Recherche | Prüfer |
|---|---|---|
| BERLIN | 29. Dezember 1995 | Krische, D |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument